# EUROPEAN PATENT APPLICATION

(11) **EP 1 743 694 A1**
(43) Date of publication of application: **17.01.2007**
(21) Application number: 06116650.0
(22) Date of filing: 05.07.2006
(51) Int. Cl.: B01J 19/24, F01N 3/28, B01J 19/02

(54) **Monolith reactor with seal**

(30) Priority: 13.07.2005 US 180253
(71) Applicant: THE BOC GROUP, INC., New Providence, NJ 07974-2082 (US)
(72) Inventor: Park, Seungdoo, Livingston, NJ 07039 (US); Jiang, Weibin, Clinton, NJ 08809 (US); Tomczak, Mark, Hillsborough, NJ 08844 (US); Acharya, Divyanshu, Bridgewater, NJ 08807 (US)
(74) Representative: Wickham, Michael

(57) **Abstract**

A catalytic reactor houses a monolithic catalyst. A catalyst impregnated carrier material is provided in the gap between the monolith catalyst and the refractory lining of the reactor. The catalytic carriers are the same catalyst materials or have substantially similar catalytic activity as the catalytic monolith. Additionally, the catalytic material is applied as a thin catalytic film deposited on the refractory lining. These methods provide not only additional pressure drop to minimize reactant flow along the inner wall of refractory lining, but also additional active reaction zone. This sealing method is suitable for any types of reactions on catalytic monoliths, particularly syngas production by partial oxidation of methane to reduce methane and oxygen leakages.

## Description

### BACKGROUND OF THE INVENTION

The present invention relates to a method of sealing and to sealing means for reactors used, for example, in the production of hydrogen and carbon monoxide (syngas). More particularly, this invention is directed to a novel method of sealing catalytic monoliths into the refractory lining of a reactor which may be used to pertain the gas phase reaction of methane and oxygen to form syngas.

It is known that ceramic foams are used as catalyst supports for chemical reactions because of high throughput and selectivity. A monolith, a type of the ceramic foam which has open interconnecting cells, has been used for short-contact-time reactions such as syngas production from methane with oxygen, hydrogen cyanide production from methane, ammonia with oxygen, and oxidative dehydrogenation of alkanes with oxygen. Monoliths have advantages of superior heat transfer, mass transfer and high effectiveness factor in these types of reactions.

Packed-bed reactors usually contain pellet- or granule-type catalysts. Suitable shapes and sizes of these catalysts are readily available for a particular type of chemical reaction. In these reactors, leakage of gas through the gap between the catalyst and the tube wall that contains the catalysts is minimal due to the large length/diameter (L/D) ratios and the random packing of catalysts. Also, this random packing provides flexibility of thermal expansion for exothermic reactions. In general, packing methods are established for shell and tube type packed-bed reactor. However, monolith reactors often require different configurations.

Monoliths usually demand, however, small L/D ratios to provide the short-contact times necessary for reactions to occur, and have low dimensional tolerances for packing. In practice, the size of monolith material is difficult to match with that of the inner wall of refractory lining, and a gap between the monolith and the inner wall of refractory lining is the inevitable consequence. For example, refractory linings expand and contract during use, and this decreases their linearity. Moreover, long refractory linings are often fabricated by connecting sections so the internal diameter is not precisely the same through the length of the reactor, and these effects can cause problems when loading disk- or cartridge-type monolith, as well as during their operation. The gap can cause mechanical instability if there are fast streams of reactants and products.

Prior methods of making a seal between catalytic monoliths and the walls of a reactor have usually made use of ceramic felts with ceramic pastes. Alumina, alumina-silica, silica or zirconia felts are conventionally inserted between the monolith and refractory lining inside the reactor. In addition, ceramic pastes comprising alumina, silica, alumina-silica, zirconia, magnesia, or boron nitride are coated onto a ceramic felt followed by curing at elevated temperature. Even though the gap can be minimized by precise design of monoliths or filling with additional sealing materials, the difference of thermal expansion of each component can cause leakage during operations at high temperature. Thermal gradients existing in both axial and radial directions can develop the gap even more. Also the temperature cycling caused by turn-down and start-up may create more leakage problems.

The leakage causes a bypass of reactant and eventually a low yield of product. Any leakage will be a burden to the overall process and can result in the need for additional processing steps such as separation, purification and recycling of gases. For example, the leakage of methane and oxygen in syngas production cause serious problems with subsequent separation processes. Accordingly, it is an object of the present invention to provide an improved sealing method for a catalytic monolith into refractory lining to prevent or reduce leakage of reactants.

### SUMMARY OF THE INVENTION

The present invention provides for a method for sealing (by which is meant the prevention or reduction of leakage of reactants) a reactor comprising providing catalytic carrier materials in the gap between a catalytic monolith and refractory lining in the reactor.

The present invention further provides for a method for improving the efficiency of reactions in a reactor comprising providing catalytic carriers in the gap between a catalytic monolith and refractory lining in the reactor.

Previous sealing methods focused on how to seal the gap between the monolith and refractory lining to prevent leaks. However, leakage caused by different physical properties of each component is inevitable, especially during the long term and high temperature operation of the reactor. The methods of the present invention provide for using packing materials, termed the carriers, which provide the same or similar catalytic activity and carry out the same desirable reactions as the catalytic monolith. The carriers provide a higher pressure drop than the catalytic monolith materials which causes less reactant to flow through the layers of the carriers.

The present invention additionally provides for a method for sealing a reactor comprising depositing a film of catalyst on the refractory lining of the reactor. This will result in further reducing the sealing problems encountered between the monolith and the refractory lining. These films are metals and/or metal oxides impregnated carriers or metals and/or metal oxides film deposited on the refractory lining to reduce leakage in the reactor. This method is especially suitable for monolith reactors that produce syngas by the partial oxidation of methane to achieve a high yield of syngas while having less leakage of oxygen and methane.

The sealing methods of the present invention are not only effective in partial oxidation reactions but also in different reactions such as steam reforming, oxidative rearrangement, alkylation, hydrogenation, dehydrogenation, and oxichlorination.

### BRIEF DESCRIPTION OF THE DRAWINGS

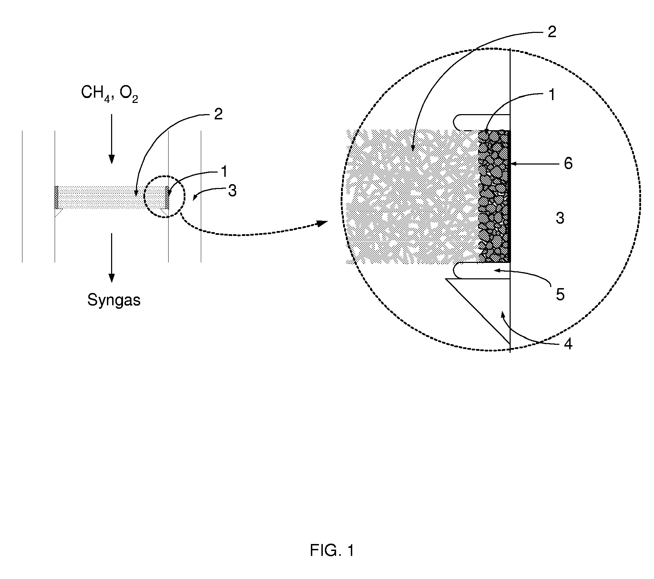

The Figure is a depiction of the monolith and refractory lining of the present invention highlighting that the gap between the reactor refractory lining and the catalytic monolith is being filled with catalytic carrier materials.

### DETAILED DESCRIPTION OF THE INVENTION

The improved monolith sealing of the present invention comprises catalytic carrier materials in the gap and additional catalytic films on the refractory lining with the same catalyst or a catalyst providing substantially the same catalytic activity as that impregnated on the monolith.

The gap that is between the monolith and refractory lining is filled with catalytic carriers that have the same or similar catalytic activity as the catalytic monolith. The carrier materials for catalysts for the present invention can be shaped as pellets, granules, cylinders, monoliths, honeycombs or any other types of catalyst supports. It is preferable to impregnate the catalysts onto the carrier shell and not the pores to enhance the effectiveness of the catalysts. The size of the carrier can be changeable and will depend upon the size of the gap and the pore size of the catalytic monolith employed in the middle of the reactor. The size of the carrier should be greater than the pore size of the monolith to prevent its penetration into the pores. Preferably, this sizing can create a higher pressure drop than the catalytic monolith. The pressure drop can result in less gas flow through the gap and better gas penetration through the catalytic monolith. The increased contact with the catalytic agents in the interior of the monolith pores will improve the yield for the desired end product.

The carrier materials can be made from any strong materials such as metals or ceramic materials. The metals are selected from the group consisting of aluminum, titanium, cobalt, nickel, copper, and iron. The ceramic materials are selected from the group consisting of alumina, zirconia, silica, aluminosilicate, magnesium aluminosilicates, and combinations thereof.

The carriers can be formed by any suitable processes such as molding, pressing, extruding, spray drying or die stamping. The carrier of the present invention will typically have a surface area of less than about 50 m² per gram. More preferably, the surface area is about 1 to about 10 m² per gram. The preferred carrier materials are non-porous or low porous materials that are able to withstand the severe process conditions and the carbon formation accompanying the reaction. The reactant flow, even if it is limited by the pressure drop through the gap, will still result in the desired reaction. The amount of the catalyst on the carrier can further be adjusted to maximize yield while minimizing leakage and carbon formation.

For better sealing an additional thin catalytic film is deposited on the refractory lining. This catalytic film is formed by any suitable procedure such as impregnation, adsorption/ion exchange, precipitation, painting, spraying or slurry coating, followed by the catalyst activation step. The same or similar catalysts to those that are on the carrier can be deposited on the refractory lining wall where the monolith and the catalytic carrier are located.

The metals used in the catalysts are selected from certain transition and noble metals of the Periodic Table of Elements. Active metals can be selected from the group consisting of transition or noble metals selected from the group of nickel, cobalt, iron, platinum, palladium, iridium, rhenium, ruthenium, rhodium, osmium and combinations thereof. Preferably the metal catalyst is rhodium.

The Figure is an illustration of the present invention including catalytic carriers and the other elements of a syngas production reactor. In the partial oxidation of methane and oxygen to produce syngas, rhodium impregnated onto alumina pellets 1 or small-reticulated ceramic foams 1 can be filled in the annular gap between rhodium impregnated catalytic monolith 2 and alumina based refractory lining 3. A catalytic monolith is positioned onto either a small step 4 in refractory lining or onto additional supports, such as blank honeycombs or monoliths. A ceramic paste 5 can also be applied on the top and the bottom of the carriers to maintain their packing structure. Optionally, the catalytic film 6 containing rhodium is coated on the inner wall of the refractory lining by the painting of a dense rhodium nitrate solution.

Depending upon the type of catalyst that is employed, the catalyst can also be provided with additives. The addition of ceria to rhodium for example is advantageous when the catalyst is used for the partial oxidation of methane wherein a stream of gas that contains methane and oxygen or air is passed over the catalytic monolith. The composition of this feed gas stream varies within fairly wide limits taking account of the potential for explosion and carbon formation. Typically, the molar ratio of methane to oxygen can be about 60:40 to about 66:33.

The feed gas stream can also contain other inert gases such as nitrogen, carbon dioxide, sulfur compounds and saturated hydrocarbons. Reaction temperatures which are employed are elevated and are preferably in the range of about 600° to about 1200°C. The pressure of the feed gas stream can be about 1 to about 20 atmospheric gauges.

The following examples are intended to further illustrate the present invention and are not intended to limit the scope of the invention.

### Examples 1 and 2

Catalytic monoliths of Examples 1 and 2 were prepared by commonly known methods. Ceria wash-coated zirconia based monolith was procured from a commercial supplier. Each monolith had a cell density of 45 cells per square inch and weighed about 2.6 grams. Each monolith was in the shape of a disk about 0.8 inches in diameter by about 0.25 inches in height.

Additional ceria was coated on each monolith such that ceria comprised about 20% by weight of the original monolith. After coating with ceria, sintering was performed at 550°C for 8 hours in air. Rhodium was then impregnated onto the ceria coated zirconia monolith such that rhodium constituted about 2% by weight of the original monolith. After impregnation, samples were then sintered at 650°C for 8 hours in hydrogen. The samples were then stored in a reduced condition prior to their use.

Syngas from methane and oxygen was prepared using the catalytic monoliths packed in Example 1 and 2 according to the following procedure. First, a blank monolith wrapped with zirconia felt on its edge was inserted into a cylinder-type refractory lining made of alumina. The inner diameter refractory lining is 1.0 inches resulting in a gap of 0.2 inches between the catalytic monolith and the refractory lining. Zirconia glue was applied onto the zirconia felt to prevent any gap. While the zirconia glue was still viscous and not completely dry, a rhodium loaded catalytic monolith which had the same dimensions compared to the blank monolith was placed on top of the blank monolith, wrapped with zirconia felt on its edge. And then zirconia glue was applied onto the zirconia felt. Another blank monolith wrapped with zirconia felt was placed at the top of the catalytic monolith followed by applying zirconia glue on the zirconia felt. The blank monolith was added to help prevent axial heat loss and to provide mass distribution during the partial oxidation process. This catalytic monolith was employed in Example 1.

The catalytic monolith employed in Example 2 was prepared using the same procedure as that of Example 1 except that there is no zirconia felt at the edge of catalytic monolith. Instead, the gap between the catalytic monolith and refractory lining is filled up with rhodium loaded catalytic carriers.

A thermocouple was placed at the top and the bottom of each monolith during the partial oxidation to measure temperature. A gas mixture of 3.25 normal liters (measured as N.P.T.) of natural gas and 1.75 normal liters of oxygen was caused to travel under a pressure of about 1.5 atmospheres over each catalyst. 0.5 normal liters of hydrogen was added to initiate the reaction. Analysis of product was accomplished by an on-line gas analyzer combined with a fine oxygen analyzer. The results of the analysis of the products from each example are set forth in Table 1 below.

**Table 1. Compositions of syngas product by partial oxidation of methane**

| **Example** | **CH₄, %** | **O₂, ppm** | **CO,%** | **H₂, %** | **CO₂, %** |
|---|---|---|---|---|---|
| 1 | 2.8 | 2400 | 31.4 | 62.5 | 2.6 |
| 2 | 2.5 | 15 | 31.9 | 63.0 | 2.8 |

While this invention has been described with respect to particular embodiments thereof, it is apparent that numerous other forms and modifications of this invention will be obvious to those skilled in the art. The appended claims and this invention generally should be construed to cover all such obvious forms and modifications which are within the true spirit and scope of the present invention.

## Claims

1. A method for sealing a reactor having a refractory lining comprising providing catalytic carrier materials in the gap between a catalytic monolith and the refractory lining in said reactor.

2. A method as claimed in claim 1, wherein said reactor is for the production of gas.

3. A method as claimed in claim 2, wherein said gas is syngas.

4. A method as claimed in any one of the preceding claims, wherein said catalytic carrier material comprises a catalyst.

5. A method as claimed in claim 4, wherein said catalytic carrier material has the same or substantially the same catalytic activity as said catalytic monolith.

6. A method as claimed in any one of the preceding claims, wherein said catalytic carrier material carries a catalyst selected from the group consisting of nickel, cobalt, iron, platinum, palladium, iridium, rhenium, ruthenium, rhodium, osmium and combinations thereof.

7. A method as claimed in any one of the preceding claims, wherein said carrier is a metal selected from the group consisting of aluminum, titanium, cobalt, nickel, copper, iron and mixtures thereof.

8. A method as claimed in any one of the preceding claims, wherein said carrier is a ceramic material selected from the group consisting of alumina, zirconia, ceria, silica, aluminosilicate, magnesium aluminosilicates, a combination of magnesium aluminosilicates-aluminosilicate, and mixtures thereof.

9. A method as claimed in any one of the preceding claims, wherein said carrier comprises a shape selected from the group consisting of pellets, granules, cylinders, monoliths, honeycombs, and mixtures thereof.

10. A method as claimed in any one of the preceding claims, further comprising depositing a film of catalyst on the refractory lining of said reactor.
